# FASCICULE DE BREVET EUROPEEN

(11) **EP 3 418 134 B1**
(45) Date de publication et mention de la délivrance du brevet: **08.07.2020**
(21) Numéro de dépôt: 18176662.7
(22) Date de dépôt: 08.06.2018
(51) Int. Cl.: B60S 1/56, G02B 27/00, B60S 1/52

(54) **PLATINE DE SUPPORT DE CAPTEUR OPTIQUE, CORPS D'ACHEMINEMENT D'UN DISPOSITIF DE NETTOYAGE TÉLESCOPIQUE DE CE CAPTEUR OPTIQUE, ET ENSEMBLE DE CES COMPOSANTS**
HALTEPLATTE EINES OPTISCHEN SENSORS, FÜHRUNGSKÖRPER EINER TELESKOP-REINIGUNGSVORRICHTUNG DIESES SENSORS, UND ANORDNUNG DIESER BESTANDTEILE
SUPPORT PLATE OF OPTICAL SENSOR, CONDUCTING BODY OF A TELESCOPIC CLEANING DEVICE FOR SAID OPTICAL SENSOR, AND ASSEMBLY OF THESE COMPONENTS

(30) Priorité: 22.06.2017 FR 1755707
(43) Date de publication de la demande: 26.12.2018
(73) Titulaire: Valeo Systèmes d'Essuyage, 78322 Le Mesnil Saint Denis (FR)
(72) Inventeur: PICOT, Philippe, 63500 ISSOIRE (FR); ROLLET, Sébastien, 63500 ISSOIRE (FR); VIEILLE, Jordan, 63500 ISSOIRE (FR); GRASSO, Giuseppe, 63500 ISSOIRE (FR)
(74) Mandataire: Valeo Systèmes d'Essuyage

(56) Documents cités:
- EP-A1- 3 121 070
- DE-A1-102016 107 380
- US-A1- 2016 272 163

## Description

La présente invention se rapporte au domaine technique des systèmes de détection optique destinés à équiper un véhicule automobile et des dispositifs de nettoyage destinés à projeter au moins un fluide de nettoyage et/ou de séchage vers une surface optique à nettoyer d'un capteur optique d'un tel système de détection. L'invention concerne plus particulièrement une platine de support d'un système de détection optique destinée à coopérer avec un dispositif de nettoyage télescopique pour former un dispositif de fixation rapide de dispositif de nettoyage par rapport au capteur. Le document DE 10 2016 107 380 A1 est considéré comme l'état de la technique le plus proche de l'objet des revendications indépendantes.

On appelle système de détection optique tout système comportant des capteurs optiques tels que des caméras, des capteurs laser ou autres capteurs basés sur l'émission et/ou la détection de la lumière dans le spectre visible ou invisible pour l'Homme, en particulier l'infrarouge.

De tels systèmes de détection optique ont pour fonction de recueillir des informations sur l'environnement du véhicule automobile, afin de fournir au conducteur une aide à la conduite et/ou à la manœuvre de ce véhicule. Pour que cette aide soit efficace, les données fournies par le système de détection optique doivent être de la meilleure qualité possible, et il est donc indispensable de disposer de capteurs optiques propres pour réaliser ces acquisitions de données. Pour ce faire, un dispositif de nettoyage télescopique peut être agencé au voisinage du capteur optique du système de détection optique et commandé pour projeter, sur une surface optique du capteur optique, un ou plusieurs fluides de nettoyage et/ou de séchage avant que soit réalisée la détection. De manière connue, un tel dispositif de nettoyage télescopique est fixé sur un boitier du capteur optique et comporte au moins un corps d'acheminement de fluide formé d'une partie mobile, constituée d'un piston logé dans un cylindre de vérin et apte à se déplacer d'une position de repos rétractée à une position de nettoyage déployée. Le corps d'acheminement est habituellement raccordé, à son extrémité arrière, et par l'intermédiaire d'un conduit d'alimentation flexible, à un réservoir de stockage du ou des fluides de nettoyage et/ou de séchage, et raccordé à son extrémité avant, opposée à son extrémité arrière, à un dispositif de distribution et de projection du ou des fluides de nettoyage et/ou de séchage. Le dispositif de distribution et de projection de fluide(s) de nettoyage et/ou de séchage peut comporter une rampe de distribution qui s'étend, symétriquement de part et d'autre de l'axe d'allongement du corps d'acheminement de fluide selon une direction transversale à celle dudit axe d'allongement et dans laquelle sont agencés un ensemble d'orifices de distribution par lesquels le ou les fluides de nettoyage et/ou séchage sont projetés sur la surface optique à nettoyer.

L'invention s'inscrit dans ce contexte et vise à proposer une amélioration des solutions existantes relatives aux systèmes de fixation des dispositifs de nettoyage télescopiques sur des boitiers de capteur optique. L'invention a ainsi pour but de proposer une platine de support d'un capteur optique d'un système de détection optique destinée à coopérer par encliquetage avec un corps d'acheminement de fluide d'un dispositif de nettoyage télescopique pour former un dispositif de fixation rapide fiable et dont le coût de conception est moindre.

Dans la description qui suit, les dénominations « arrière » et « avant » se réfèrent à la direction d'écoulement du fluide de nettoyage dans le dispositif de nettoyage, en particulier dans le corps d'acheminement de fluide selon l'invention. Ainsi, la dénomination « arrière » se réfère au côté du corps d'acheminement par lequel ce fluide est admis en son sein, et la dénomination « avant » se réfère au côté du corps d'acheminement par lequel le fluide est distribué à l'extérieur de celui-ci, par l'intermédiaire d'un élément de distribution de fluide située dans son prolongement, vers une surface optique d'un capteur optique d'un ensemble de détection optique d'un véhicule automobile. En outre, la direction transversale sera comprise par rapport à la direction longitudinale définit par l'axe principal d'allongement du corps d'acheminement de fluide.

L'invention a pour premier objet une platine de support d'un capteur optique d'un système de détection optique d'un véhicule automobile comportant une première face du côté du capteur optique et une seconde face opposée comportant des moyens de fixation d'un corps d'acheminement de fluide de nettoyage et/ou de séchage d'un dispositif de nettoyage télescopique du capteur optique. Selon l'invention, ladite platine est configurée pour former, avec ce corps d'acheminement de fluide, un dispositif de fixation rapide du dispositif de nettoyage télescopique. Selon l'invention, la seconde face de la platine de support comporte une interface de positionnement et d'orientation d'une première partie du corps d'acheminement de fluide et une interface de verrouillage d'une deuxième partie du corps d'acheminement de fluide. La première face est notamment destinée à porter le capteur optique.

Selon différentes caractéristiques de l'invention, prises seules ou en combinaison, on peut prévoir que :
- l'interface de positionnement et d'orientation comporte des moyens de guidage et l'interface de verrouillage comporte des moyens de fixation par encliquetage, respectivement configurés pour coopérer avec des moyens complémentaires portés par le corps d'acheminement.
- Le corps d'acheminement de fluide comporte une première extrémité par laquelle le fluide de nettoyage et/ou de séchage est admis en son sein, et une seconde extrémité reliée à un élément de distribution de fluide, par exemple une rampe, par lequel le fluide est distribué à l'extérieur du corps d'acheminement de fluide.
- L'interface de positionnement et d'orientation comporte au moins un siège de réception d'une première partie du corps d'acheminement ménagé par une paroi de fond en bout d'une glissière de guidage, ledit siège de réception étant configuré pour participer à former un axe de rotation dudit corps d'acheminement.
- L'interface de positionnement et d'orientation solidaire de la platine de support comporte une première paroi transversale arrière, qui comporte une paire de ces glissières de guidage, notamment agencées symétriquement à chaque extrémité transversale de la première paroi, ainsi qu'une seconde paroi transversale avant, ménageant sur sa face supérieure une face de butée, et des parois latérales symétriques qui relient l'une à l'autre des parois.
- Les moyens de guidage de l'interface de positionnement et d'orientation peuvent notamment être compris comme comportant à la fois la paire de glissières de guidage, les sièges ménagés dans ces glissières et la butée ménagée au sommet de la seconde paroi.
- L'interface de verrouillage comporte une ouverture de réception de la deuxième partie du corps d'acheminement, avec un montant participant à délimiter cette ouverture qui porte des moyens d'encliquetage.
- Un montant participant à délimiter l'ouverture de réception porte des éléments de butée.
- L'interface de verrouillage est réalisée par un premier montant transversal qui forme un élément de butée, et par exemple une paire d'éléments de butée, par une second montant transversal opposé au premier montant transversal et qui comporte des seconds moyens d'encliquetage et par une paire de montants latéraux reliant l'un à l'autre les montants transversaux et comportant respectivement des premiers moyens d'encliquetage.
- Les moyens de fixation par encliquetage portés par l'interface de verrouillage comportent les premiers et seconds moyens d'encliquetage.
- Les éléments de butée comportent une face supérieure inclinée, par rapport au plan défini par la platine de support, d'un angle inférieur ou égal à 25°, notamment compris entre 10 et 25°.
- Les premiers moyens d'encliquetage comportent une base solidaire d'un montant latéral et en saillie de laquelle un pion s'étend vers l'intérieur de l'ouverture de réception de la deuxième partie du corps d'acheminement.
- Les seconds moyens d'encliquetage forment une languette dépassant en saillie du second montant transversal et comportant un plan incliné pour guider vers l'intérieur de l'orifice de réception la deuxième partie du corps d'acheminement.

Selon une variante de réalisation, l'interface de verrouillage comprend un premier montant transversal arrière qui comporte un moyen d'encliquetage, et un second montant transversal avant qui comporte des éléments de butée. L'interface de verrouillage peut comporter en outre des montants latéraux qui relient l'un à l'autre les montants transversaux.

Les moyens de fixation par encliquetage portés par l'interface de verrouillage comportent en particulier le moyen d'encliquetage. Et le moyen d'encliquetage peut présenter la forme d'une portion annulaire s'étendant en saillie de l'ouverture de réception de la deuxième partie du corps d'acheminement, ladite portion annulaire définissant un orifice central, de préférence circulaire.

Un deuxième objet de l'invention concerne un corps d'acheminement de fluide de nettoyage et/ou de séchage d'un dispositif de nettoyage télescopique d'un capteur optique d'un système de détection optique d'un véhicule automobile apte à être fixé sur une platine de support, ledit corps étant configuré pour former, avec cette platine, un dispositif de fixation rapide du dispositif de nettoyage télescopique, le corps d'acheminement de fluide de nettoyage, de révolution autour d'un axe d'allongement, présentant une première extrémité arrière par laquelle le fluide de nettoyage est admis en son sein, et une seconde extrémité avant reliée à un élément de distribution par lequel le fluide est distribué à l'extérieur du corps d'acheminement de fluide vers une surface optique du capteur optique. Selon l'invention, le corps d'acheminement de fluide comporte une première partie de guidage en position du corps par rapport à la platine de support et une seconde partie de fixation par encliquetage de ce corps sur la platine.

Selon une série de caractéristiques de l'invention, propres au premier mode de réalisation de la partie de fixation par encliquetage, on peut prévoir que :
- la première partie de guidage en position et la seconde partie de fixation par encliquetage sont sensiblement alignés le long de l'axe d'allongement déploiement du dispositif de nettoyage télescopique.
- La première partie de guidage comporte des moyens de guidage destinés à coopérer avec les moyens de guidage de l'interface de positionnement et d'orientation de la platine de support et la seconde partie de fixation par encliquetage comporte des moyens complémentaires de fixation par encliquetage configurés pour coopérer avec les moyens de fixation par encliquetage portés par la platine de support au niveau de l'interface de verrouillage.
- La première partie de guidage comporte au moins un ergot cylindrique, participant à définir un axe de rotation du corps d'acheminement de fluide.
- La première partie de guidage comporte un organe de butée au déplacement par rotation du corps d'acheminement de fluide autour de l'axe de rotation. Une dent forme en particulier l'organe de butée.
- La première partie de guidage comporte au moins une paroi latérale avec au moins une zone de surépaisseur formant des godrons.
- Les moyens de guidage sont formés au moins par un ergot cylindrique.
- L'élément de distribution de fluide est constitué d'une rampe de distribution de fluide ; la direction de déplacement de l'élément de distribution d'une position de repos à une position active de nettoyage, c'est-à-dire la direction d'allongement du dispositif de nettoyage, est perpendiculaire à l'axe de rotation du corps défini par l'au moins un ergot cylindrique.
- La seconde partie de fixation par encliquetage comporte au moins un moyen complémentaire d'encliquetage, déformable élastiquement au moins dans la direction du déploiement télescopique, et au moins une butée.
- La butée, qui peut consister en une paire de butées, est destinée à venir en appui sur les éléments de butée de l'interface de verrouillage porté par la platine de support ; le moyen complémentaire d'encliquetage peut prendre la forme d'au moins des premiers moyens complémentaires d'encliquetage destinés à coopérer avec les premiers moyens d'encliquetage portés par l'interface de verrouillage, d'un deuxième moyen complémentaire d'encliquetage, destiné à coopérer avec les seconds moyens d'encliquetage de l'interface de verrouillage.
- Les premiers moyens complémentaires d'encliquetage peuvent comporter une patte déformable élastiquement apte à coopérer avec une rampe ménage dans un montant de l'interface de verrouillage.
- Le deuxième élément complémentaire d'encliquetage peut comporter deux bras déformables élastiquement qui délimitent une ouverture de forme complémentaire de celle d'un pion formant moyens d'encliquetage de l'interface de verrouillage, les bras étant flexibles pour laisser passage au pion dans l'ouverture et venir enserrer le pion une fois en position.

Selon une variante de réalisation de l'invention, les moyens complémentaires de fixation sont configurés pour coopérer avec un moyen d'encliquetage. Ce moyen d'encliquetage peut présenter un orifice central ménagé dans l'interface de verrouillage de la platine support. Les moyens complémentaires de fixation peuvent ainsi comporter une languette flexible, présentant une tête d'encliquetage, et un barreau de renfort. Et la tête d'encliquetage peut coopérer, par complémentarité de forme, avec l'orifice central de l'interface de verrouillage, de préférence en ayant une forme en arc de cercle.

Un troisième objet de l'invention concerne un procédé de montage d'un corps d'acheminement de fluide de nettoyage et/ou de séchage tel que précédemment décrit d'un dispositif de nettoyage télescopique sur une platine de support tel que précédemment décrite d'un capteur optique d'un système de détection optique d'un véhicule automobile, au cours duquel on réalise au moins :
- une étape de translation du corps d'acheminement de fluide vers l'interface de positionnement et d'orientation de la platine de support pour faire coopérer au moins un ergot cylindrique du corps d'acheminement de fluide avec une glissière de réception de cette interface de positionnement et d'orientation,
- une étape de rotation du corps d'acheminement de fluide, autour de l'axe de rotation défini par l'au moins un ergot cylindrique, pour permettre le rapprochement et le verrouillage des moyens de fixation par encliquetage.

Selon une caractéristique de l'invention, le procédé de montage peut comprendre, préalablement à l'étape de translation, au moins une étape de positionnement de l'au moins un ergot cylindrique en avant d'au moins une glissière (20) de guidage , en particulier d'une paire de glissières de guidage et une étape de basculement du corps d'acheminement de fluide dans une position de pré-assemblage pour positionner l'ergot dans un siège formé dans la glissière de guidage correspondante.

D'autres caractéristiques et avantages de l'invention apparaitront plus clairement à la lecture de la description détaillée des modes de réalisation de l'invention, donnée ci-après à titre d'exemples illustratifs et non limitatifs et s'appuyant sur les figures annexées, dans lesquelles on a illustré une platine de support d'un capteur optique d'un système de détection optique d'un véhicule automobile destinée à coopérer par fixation rapide avec un corps d'acheminement de fluide d'un dispositif de nettoyage télescopique, et parmi lesquelles :
- la figure 1 est une vue de face d'un véhicule où est installé un système de détection optique comportant au moins un dispositif de nettoyage destiné à projeter au moins un fluide de nettoyage et/ou de séchage vers une surface optique du système de détection optique,
- la figure 2 est une vue en perspective d'un premier mode de réalisation du dispositif de fixation rapide selon l'invention, par lequel une platine de support d'un capteur optique d'un système de détection optique d'un véhicule automobile coopère avec un corps d'acheminement de fluide de nettoyage et/ou de séchage d'un dispositif de nettoyage télescopique comportant à une extrémité un élément de distribution de fluide,
- la figure 3 est une vue de détail en perspective du dispositif de fixation rapide de la figure 2, dans une position de pré-assemblage du corps d'acheminement de fluide par rapport à la platine de support,
- la figure 4 est une vue de détail en perspective du dispositif de fixation rapide de la figure 2, dans une position d'assemblage du corps d'acheminement de fluide par rapport à la platine de support, ladite platine de support ayant été partiellement coupée pour rendre visible des moyens de positionnement et d'encliquetage du corps d'acheminement,
- la figure 5 est une vue de dessous de la platine de support et du corps d'acheminement de fluide, en position d'assemblage, selon le premier mode de réalisation du dispositif de fixation rapide illustré sur la figure 2, rendant visible la coopération de moyens d'encliquetage pour la fixation de l'un sur l'autre,
- la figure 6 est une vue en perspective d'une platine de support d'un dispositif de fixation rapide selon un second mode de réalisation de l'invention,
- les figures 7 et 8 sont des vues en perspective, respectivement avant et arrière, d'un corps d'acheminement de fluide susceptible de coopérer avec la platine de support de la figure 6 pour un dispositif de fixation rapide selon un second mode de réalisation,
- les figures 9, 10, 11 sont des vues de côté des étapes successives du procédé de montage via le dispositif de fixation rapide selon le second mode de réalisation illustré sur les figures 6 à 8,
- la figure 12 est une vue de dessous similaire à celle de la figure 5 relative au deuxième mode de réalisation du dispositif de fixation rapide selon l'invention.

Il est tout d'abord à noter que si les figures exposent l'invention de manière détaillée pour sa mise en œuvre, elles peuvent bien entendu servir à mieux définir l'invention le cas échéant. De même, il est rappelé que, pour l'ensemble des figures, les mêmes éléments sont désignés par les mêmes repères.

Tel qu'elle va être décrite par la suite selon deux modes de réalisation différents, l'invention porte, pour au moins l'un de ses aspects, sur un dispositif de fixation rapide 100 d'un corps d'acheminement de fluide de nettoyage et/ou de séchage, équipant notamment un dispositif télescopique de nettoyage d'un capteur optique d'un véhicule automobile, sur une platine de support de ce capteur. On comprendra que les modes de réalisation de l'invention illustrés par les figures sont données à titre d'exemple non limitatif. Par conséquent, d'autres configurations du dispositif de fixation rapide selon un aspect de l'invention peuvent être réalisées, notamment par variations de l'agencement et du dimensionnement d'une interface de positionnement et d'une interface de verrouillage constitutives de la platine de support ainsi que d'une partie de guidage et d'une partie de fixation par encliquetage constitutives du corps d'acheminement de fluide de nettoyage et/ou de séchage qui sont amener à coopérer selon l'invention pour former un dispositif de fixation rapide.

Il est également rappelé que, dans la description qui suit, les dénominations "arrière" et "avant" se réfèrent à la direction d'écoulement du fluide dans le dispositif de nettoyage télescopique, en particulier dans le corps d'acheminement de fluide de nettoyage et/ou de séchage selon l'invention. Ainsi, la dénomination " arrière" se réfère au côté du corps d'acheminement de fluide par lequel ce fluide est admis en son sein, et la dénomination "avant" se réfère au côté du corps d'acheminement de fluide par lequel le fluide est distribué à l'extérieur de celui-ci par l'intermédiaire d'un élément de distribution située dans son prolongement, vers une surface d'un capteur optique d'un ensemble de détection optique d'un véhicule automobile. Ainsi, on considère que l'interface de positionnement et d'orientation de la platine de support et la première extrémité du corps d'acheminement de fluide sont situées à l'arrière du dispositif de fixation rapide selon l'invention et que l'interface de verrouillage de la platine de support et la seconde extrémité du corps d'acheminement de fluide sont situées à l'avant du dispositif de fixation rapide selon l'invention.

En outre, selon un agencement classique de l'invention, on considère que la première face de la platine de support, destinée à porter le capteur optique, est la face inférieure de ladite platine de support et que la seconde face opposée, destinée à coopérer avec le corps d'acheminement de fluide selon l'invention, est la face supérieure de ladite platine de support.

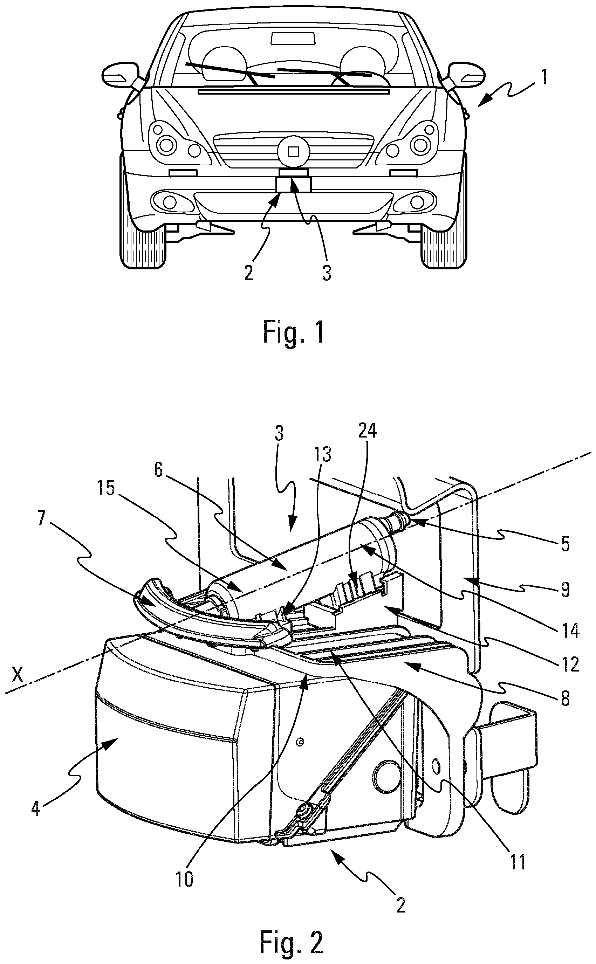

La figure 1 illustre un véhicule 1 comportant un système de détection optique faisant partie d'un système d'aide à la conduite, ce système de détection optique comportant ici en face avant du véhicule 1 un capteur optique 2 et un dispositif de nettoyage 3. L'ensemble de détection est ici agencé sur la face avant du véhicule, notamment au niveau de la calandre.

La figure 2 illustre le dispositif de nettoyage 3, agencé au voisinage d'une surface optique 4 d'un capteur optique 2 porté par une première face 10 inférieure d'une platine de support 8.

L'ensemble ainsi formé par le dispositif de nettoyage télescopique 3, la platine de support 8 et le capteur optique 2 est porté par une plaque de support 9 ici assemblée par vissage sur le véhicule 1.

Le dispositif de nettoyage télescopique 3 est constitué pour l'essentiel, de l'arrière vers l'avant suivant un axe longitudinal X d'allongement du dispositif de nettoyage 3, d'un embout d'admission de fluide 5, d'un corps 6 d'acheminement de fluide de nettoyage et/ou de séchage, de révolution autour de l'axe d'allongement X et d'un élément de distribution 7 de fluide, ici constitué d'une rampe de distribution.

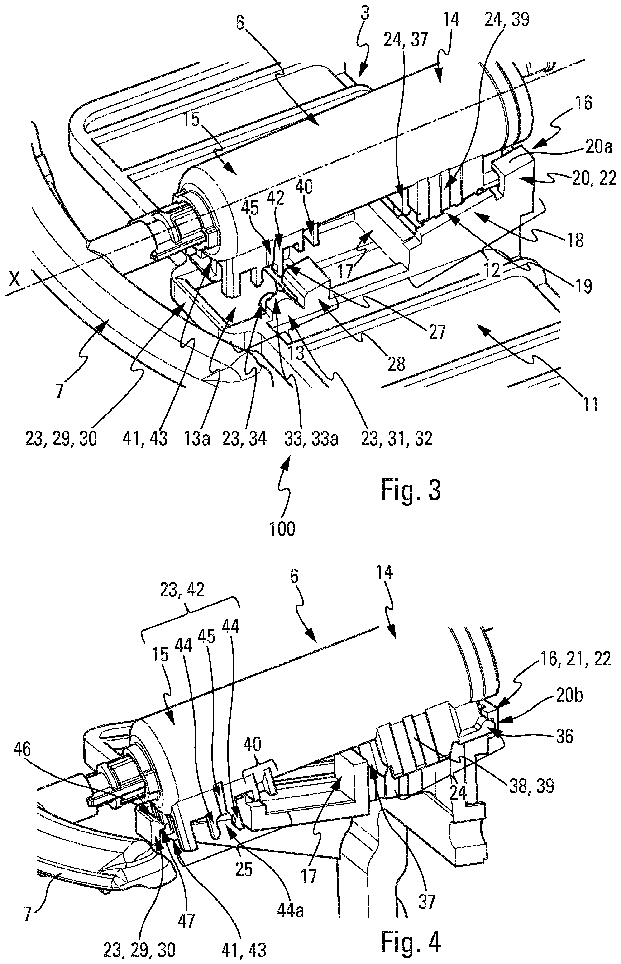

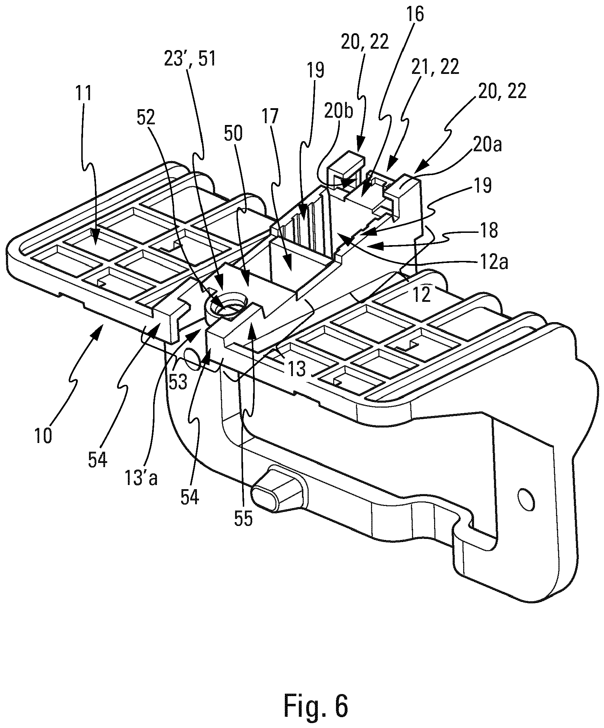

Le corps 6 d'acheminement de fluide est fixé sur une seconde face 11 supérieure de la platine de support 8 par coopération d'une première extrémité 14 arrière avec une interface de positionnement et d'orientation 12 de la platine de support et par coopération d'une seconde extrémité 15 avant avec une interface de verrouillage 13, 13' de cette platine de support (visible sur les figures 3 et 6).

L'élément de distribution 7 est porté à l'extrémité d'un piston mobile (non visible) configuré pour coulisser à l'intérieur du corps creux 6 d'acheminement de fluide entre une position déployée et une position rétractée, de sorte que l'élément de distribution 7 peut prendre en conséquence une position de nettoyage dans laquelle il se retrouve déployé en avant de la surface optique 4 à nettoyer, les buses de distribution de l'élément de distribution 7 étant orientées de manière à ce que le fluide de nettoyage soit projeté sur la surface optique 4, et une position escamotée, visible sur la figure 2, dans laquelle l'élément de distribution 7 est protégé et ne gêne pas la détection via le capteur optique 2.

On va maintenant décrire plus en détails, en se référant aux figures 3 à 5, un premier mode de réalisation du dispositif 100 de fixation rapide selon l'invention.

La figure 3 illustre ce dispositif dans une position de pré-assemblage du corps 6 d'acheminement de fluide sur la seconde face 11 supérieure de la platine de support 8.

La seconde face 11 de la platine de support 8 comporte une interface de positionnement et d'orientation 12 et une interface de verrouillage 13, agencées l'une derrière l'autre le long d'une direction parallèle à l'axe d'allongement X du dispositif de nettoyage 3.

L'interface de positionnement et d'orientation 12 est apte à coopérer avec une première partie de guidage 24 (visible sur la figure 4) agencée sur une face extérieure du corps 6 d'acheminement de fluide, au niveau de sa première extrémité 14 arrière. L'interface de verrouillage 13 est apte à coopérer avec une seconde partie 25 de fixation par encliquetage (visible sur la figure 4) agencée sur cette même face extérieure du corps 6 d'acheminement de fluide, cette fois au niveau de sa seconde extrémité 15 avant.

L'interface de positionnement et d'orientation 12 présente la forme d'un cadre, sensiblement rectangulaire, réalisé par une première paroi 16 transversale arrière, par une seconde paroi 17 transversale avant agencée parallèlement à la première paroi 16, et par une paire de parois latérales 18 symétriques qui comportent chacune sur chaque face intérieure au moins une zone 19 de surépaisseur formant godrons, ici trois zones de surépaisseur. Une ouverture 12a est délimitée à l'intérieur du cadre entre ces quatre parois.

La première paroi 16 transversale comporte à chaque extrémité latérale une glissière de guidage en position 20, chaque glissière 20 étant délimitée à l'opposé de la platine de support 8 par un rebord 20a et par une paroi de fond 20b au profil en portion de cercle, formant siège pour un ergot cylindrique solidaire du corps d'acheminement 6 tel qu'il va être décrit ci-après. Deux glissières 20 sont agencées symétriquement aux extrémités latérales de la première paroi 16 transversale, en étant séparées par une tige de butée 21 centrale.

La paire de glissières de guidage en position 20 et la tige de butée 21 centrale constituent les moyens de guidage 22 de l'interface de positionnement et d'orientation 12, configurés pour coopérer avec la première partie de guidage 24 (visible sur la figure 4) portée sur la paroi extérieure de sa première extrémité 14 arrière du corps 6 d'acheminement de fluide.

Tel que cela est visible sur la figure 2, la hauteur de la seconde paroi 17 transversale avant, c'est-à-dire la dimension de cette paroi en saillie de la seconde face 11 de la platine de support 8, est inférieure à la hauteur de la première paroi 16 transversale arrière (visible sur la figure 6) de manière à conférer aux parois latérales 18 de l'interface de positionnement et d'orientation une inclinaison d'angle alpha (α), inférieur ou égal à 25°, notamment compris entre 10 et 25°, et par exemple égal à 15°, par rapport à un plan défini par la platine de support 8. Etant entendu que cette platine de support 8 est solidaire du capteur et permet la fixation du corps d'acheminement, il est de la sorte possible de s'assurer, en position d'assemblage, d'une inclinaison déterminée de l'axe d'allongement X et donc du déploiement de l'élément de distribution 7 par rapport au plan de la platine de support 8 et donc d'une position optimale de distribution par rapport à la surface optique 4.

L'interface de verrouillage 13 solidaire de la platine de support 8 comporte des moyens de fixation 23 par encliquetage de la seconde extrémité 15 du corps 6 d'acheminement de fluide. Plus particulièrement, l'interface de verrouillage 13 forme un cadre, sensiblement carré, à l'intérieur duquel une ouverture 13a est configurée pour recevoir la seconde partie de fixation 25, cette ouverture 13a étant délimitée par un premier montant transversal 27 arrière, par un deuxième montant transversal 29 opposé avant et par une paire symétrique de montants latéraux 31.

Chacun de ces montants latéraux 31 comportent, sur au moins une portion de leur face intérieure, des premiers moyens 32 d'encliquetage formés d'une base 33 creusée depuis son sommet d'une rainure 33a verticale et qui s'étend jusqu'à un pion 34, cylindrique de section circulaire et dépassant en saillie de la base pour s'étendre vers le centre du cadre formé par l'interface de verrouillage 13.

Le premier montant transversal 27 arrière comporte au moins un élément de butée 28, ici deux éléments de butée disposés symétriquement à chaque extrémité transversale du premier montant transversal 27, dont la face supérieure, c'est-à-dire la face opposée à la platine de support 8, est inclinée par rapport au plan de cette platine. Avantageusement, l'inclinaison de cette face supérieure de l'élément de butée présente un angle équivalent à ce qui a été décrit précédemment, à savoir un angle alpha (α), inférieur ou égal à 25°, notamment compris entre 10 et 25°, et par exemple égal à 15°, par rapport au plan défini par la platine de support 8. Dans une variante non illustrée angle alpha (α) est nul.

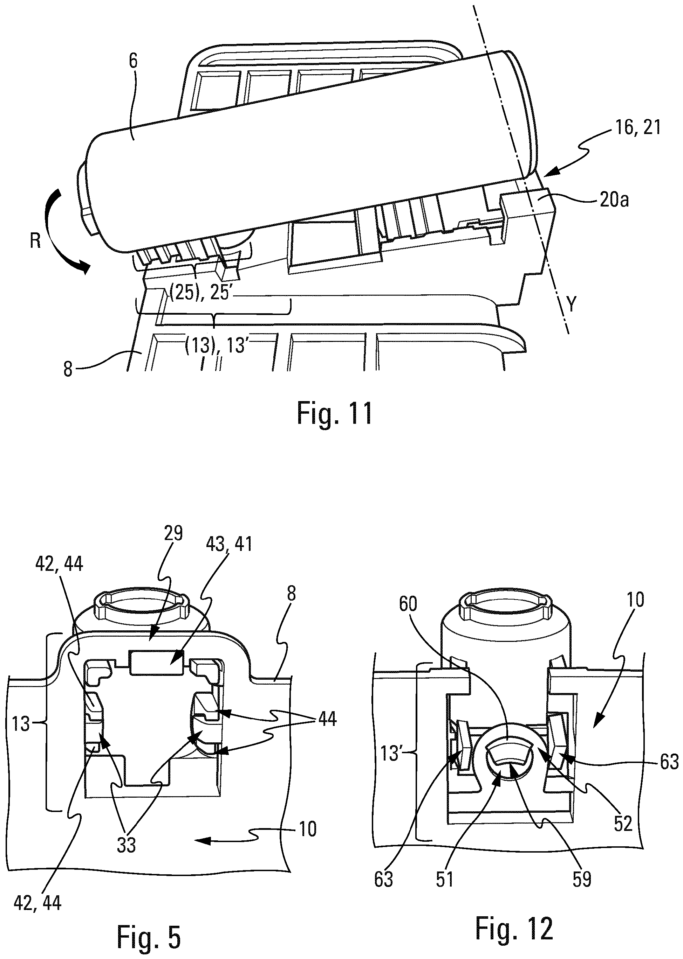

Le deuxième montant transversal 29 avant comporte des seconds moyens 30 d'encliquetage formés d'une languette s'étendant vers le centre du cadre formé par l'interface de verrouillage, la languette présentant une forme de rampe 46 sur sa face supérieure et un plan droit 47, perpendiculaire au deuxième montant transversal 29 sur sa face inférieure (visible sur la figure 5).

On comprend que dans cette configuration, les moyens de fixation 23 par encliquetage portés par l'interface de verrouillage 13 sont constitués des premiers 32 et seconds 30 moyens d'encliquetage.

Tel que cela est notamment visible sur les figures 3 et 4, le corps 6 d'acheminement de fluide selon le premier mode de réalisation comporte une première partie de guidage 24 configurée pour coopérer avec les moyens de guidage 22 de l'interface 12 de positionnement et d'orientation de la platine de support 8 et une seconde partie de fixation 25 par encliquetage configurée pour coopérer avec les moyens de fixation 23 par encliquetage portés pour partie par l'interface de verrouillage 13 de la platine de support 8.

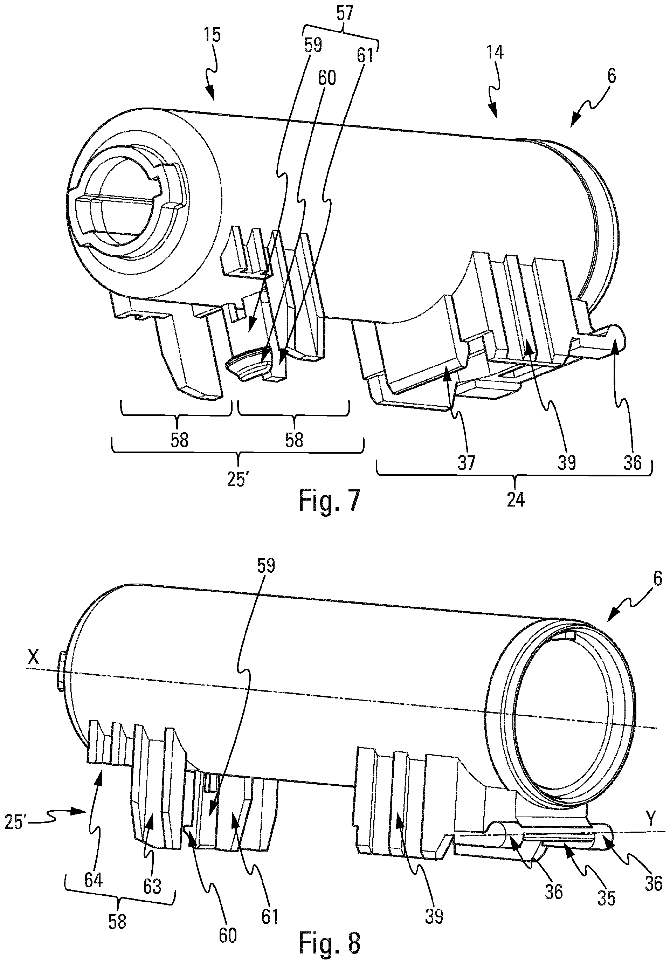

La première partie de guidage 24 forme un bloc, sensiblement rectangulaire, délimité par une branche transversale 35 arrière (on pourra se référer à titre d'exemple à la figure 8 illustrant un deuxième mode de réalisation mais dans lequel la branche transversale 35 est sensiblement la même), une dent transversale 37 avant et une paire de branches 38 latérales symétriques qui comportent sur chaque face extérieure au moins une zone 39 de surépaisseur formant godrons, ici trois zones de surépaisseur, apte à coopérer avec au moins une zone 19 de surépaisseur de la paire de parois latérales 18 de l'interface de positionnement et d'orientation 12 de manière à assurer, lorsque l'on passe de la position de pré-assemblage à la position d'assemblage, un montage « ajusté-serré » du corps 6 d'acheminement du fluide sur l'interface de positionnement et d'orientation 12.

La branche transversale 35 arrière porte à chaque extrémité transversale un ergot cylindrique 36, ces ergots étant respectivement aptes à coopérer avec une des glissières de guidage en position 20 de l'interface de positionnement et d'orientation 12 de la platine de support 8. On saura décrire ci-après comment chaque ergot est amené à coopérer avec la glissière correspondante pour prendre position dans le siège formé par la paroi de fond 20b et former un axe de rotation autour duquel le corps 6 est apte à tourner pour passer de la position de pré-assemblage à la position d'assemblage. On décrira notamment comment à cet effet on positionne la branche transversale 35 arrière solidaire du corps 6 d'acheminement de fluide contre la tige de butée 21 centrale formée dans l'interface de positionnement et d'orientation 12 de la platine de support 8.

La dent transversale 37 s'étend en saillie du corps 6 d'acheminement pour venir en appui sur la seconde paroi 17 transversale avant de l'interface de positionnement et d'orientation 12 lors de la fixation rapide du corps 6 sur la platine de support, jusqu'à ce que les ergots 36 soient correctement enfoncés dans les glissières de guidage en position 20, position dans laquelle la dent transversale 37 s'engage dans l'ouverture 12a formée à l'intérieur du cadre formé par l'interface de positionnement et d'orientation 12.

La paire d'ergots 36 cylindriques et la branche 35 forment des moyens de guidage 26 de la première partie de guidage 24 qui coopèrent avec les moyens de guidage 22 de l'interface de positionnement et d'orientation 12 de la platine de support 8 constitués de la paire de glissières de guidage en position 20 et de la tige de butée 21 centrale.

Tel que cela a été évoqué précédemment, les ergots 36 présentent une forme cylindrique complémentaire de celle des sièges formés par les parois de fond 20b de chaque glissière 20, de sorte que les ergots, lorsqu'ils sont logés dans le siège correspondant, définissent un axe de rotation du corps 6 d'acheminement de fluide, dans la zone de l'interface de positionnement et de d'orientation 12, qui permet le basculement dudit corps 6 d'acheminement de fluide pour assurer l'encliquetage des moyens de fixation 23 par encliquetage portés par l'interface de verrouillage 13 de la platine de support 8 avec la seconde partie de fixation 25 par encliquetage du corps 6 d'acheminement de fluide.

La seconde partie de fixation 25 par encliquetage comporte une paire symétrique de butées 40 angulaires transversales arrières, aptes à venir en appui sur la paire symétrique d'éléments de butée 28 de l'interface de verrouillage 13, des premiers moyens complémentaires 42 d'encliquetage latéraux apte à coopérer avec les premiers moyens 32 d'encliquetage de l'interface de verrouillage 13 et un deuxième moyen complémentaire 41 d'encliquetage transversal avant apte à coopérer avec les seconds moyens 30 d'encliquetage de l'interface de verrouillage 13.

Dans cette configuration, les premiers et deuxième moyens complémentaires 41, 42 forment des moyens complémentaires de fixation par encliquetage aptes à coopérer avec les moyens de fixation 23 par encliquetage portés par l'interface de verrouillage 13 solidaire de la platine de support.

Les premiers moyens complémentaires 42 d'encliquetage latéraux comportent chacun deux bras 44 déformables élastiquement agencées pour prendre la forme d'une fourche et délimiter une ouverture 44a de forme complémentaire de celle du pion 34. L'extrémité libre des bras 44 déformables élastiquement présente un bossage visant à réduire la section de passage de l'ouverture 44a, de sorte que lors du basculement du corps 6 d'acheminement vers sa position d'assemblage, les bras 44 sont écartés l'un de l'autre par contact contre le pion 34, jusqu'à ce que ce pion soit logé dans l'ouverture 44a et que les bras, en reprenant leur forme d'origine, retiennent le pion 34 dans l'ouverture 44a et participent à figer la position du corps 6 par rapport à la platine de support 8. Tel qu'illustré sur les figures 3 et 4 notamment, une nervure 45 forme une surépaisseur d'une paroi latérale agencée à l'aplomb de ces premiers moyens complémentaires 42 d'encliquetage et cette nervure est configurée pour glisser dans la rainure 33a verticale lors de l'encliquetage des moyens complémentaires.

Le deuxième moyen complémentaire 41 d'encliquetage transversal avant forme un moyen additionnel d'encliquetage, pour assurer la bonne fixation de l'ensemble, notamment en cas de casse des bras 44 des premiers moyens complémentaires. Il comporte notamment une patte 43 déformable élastiquement au contact de la rampe 46 formée dans l'interface de verrouillage 13. La patte 43 présente à son extrémité libre une tête dont la face opposée au corps d'acheminement, c'est-à-dire la face amenée à entrer en contact avec la rampe 46 lors du pivotement du corps 6, présente un plan incliné, et qui présente par ailleurs une surface plane de blocage amenée à coopérer avec le plan droit 47 de la languette des seconds moyens d'encliquetage 30 portés par l'interface de verrouillage 13. Tel que cela vient d'être précisé, ce deuxième moyen complémentaire 41 d'encliquetage a pour fonction de renforcer le verrouillage du dispositif de fixation rapide 100 selon un aspect de l'invention, en participant à maintenir l'encliquetage quelle que soit la direction de l'effort appliqué sur l'élément de distribution 7 de fluide.

On va maintenant décrire un second mode de réalisation du dispositif de fixation rapide selon un aspect de l'invention, en se référant aux figures 6 à 12.

Le dispositif de fixation rapide qui va être ici décrit diffère du premier mode de réalisation précédemment décrit notamment par l'agencement de l'interface de verrouillage 13' s'étendant en saillie de la seconde face 11 de la platine de support 8 (visible sur la figure 6) et par l'agencement correspondant de la seconde partie 25' de fixation par encliquetage (visible sur les figures 7 et 8) portée sur la paroi extérieure de la seconde extrémité 15 avant du corps 6 d'acheminement de fluide, étant entendu que comme précédemment, l'interface de verrouillage 13' est apte à coopérer avec ladite seconde partie 25' de fixation par encliquetage. La première interface de positionnement et d'orientation 12 reste identique ici du premier au deuxième mode de réalisation.

Dans ce second mode de réalisation, tel que visible sur la figure 6, l'interface de verrouillage 13' forme là aussi un cadre délimitant en son sein une ouverture 13a' pour recevoir la seconde partie 25' de fixation. L'interface comporte ici un premier montant 50 transversal arrière, un second montant 53 transversal opposé avant et une paire symétrique de montants latéraux 55. C'est ici le premier montant 50 transversal arrière qui porte le moyen d'encliquetage. Dans l'exemple illustré de ce second mode de réalisation, il n'est prévu qu'un unique moyen d'encliquetage 51. Et c'est ici le second montant 53 transversal avant qui comporte à ses extrémités transversales une paire symétrique d'éléments de butée 54, qui prolongent et élargissent vers l'avant les montants latéraux 55.

Il convient de noter que le second montant 53 transversal avant est ici partiellement évidé en son centre. Cet évidement facilite le positionnement du corps 6 tout en permettant un gain de matière.

Conformément à ce qui a été décrit précédemment, les éléments de butée 54 et les montants latéraux 55 présentent des faces supérieures inclinées d'un angle alpha (α), inférieur ou égal à 25°, notamment compris entre 10 et 25°. par rapport à un plan défini par la platine de support 8 , de manière à permettre, en position d'assemblage, une inclinaison optimale du corps 6 d'acheminement de fluide et donc de l'élément de distribution 7 par rapport à la surface optique 4. L'angle alpha (α) est par exemple égal à 15°comme illustré.

Dans la configuration de l'exemple illustré à la figure 6, les moyens de fixation 23' par encliquetage portés par l'interface 13' de verrouillage de la platine de support 8 sont constitués du moyen d'encliquetage 51.

Tel qu'illustré, le moyen 51 d'encliquetage s'étend en saillie du bord avant du premier montant 50 transversal arrière de manière à s'étendre dans l'ouverture formée au centre du cadre de l'interface de verrouillage 13' et il présente la forme d'une saillie partiellement annulaire qui délimite en son centre un orifice 52 central, ici de forme circulaire.

Dans ce second mode de réalisation, tel que visible sur les figures 7 et 8, la seconde partie 25' de fixation par encliquetage comporte des moyens complémentaires de fixation 57 par encliquetage, destinés à coopérer avec le moyen d'encliquetage 51 de l'interface de verrouillage 13', et des jambes 58 qui s'étendent en saillie du corps 6 d'acheminement, transversalement de part et d'autre des moyens complémentaire de fixation 57, ces jambes 58 étant aptes à coopérer simultanément avec les éléments de butée 54 de l'interface de verrouillage 13' et avec les montants latéraux 55 de cette interface de verrouillage.

Dans cette configuration, les moyens complémentaires 57 forment des moyens complémentaires de fixation par encliquetage aptes à coopérer avec les moyens de fixation 23' par encliquetage portés par l'interface de verrouillage 13' solidaire de la platine de support.

Les moyens complémentaires de fixation 57 comportent une languette flexible 59, qui présente à son extrémité libre une tête 60 d'encliquetage, ainsi qu'un barreau de renfort 61, dont la hauteur est dimensionnée par ailleurs pour former une butée contre le premier montant transversal 50 arrière.

La tête 60 d'encliquetage présente une portion angulaire complémentaire de celle de l'orifice 52 central du moyen 51 d'encliquetage, et elle présente un plan incliné sur une face opposée au corps 6 d'acheminement et un plan droit sur l'autre face de manière à pouvoir être déformée élastiquement pour passer à l'intérieur de l'orifice central puis reprendre sa forme d'origine et bloquer en position le corps d'acheminement par rapport à la platine de support 8. En d'autres termes, la languette flexible 59 est apte à se déformer élastiquement en direction du barreau de renfort 61 pour permettre l'insertion des moyens complémentaires de fixation 57 dans l'orifice 52 central correspondant.

Les jambes 58 comportent une portion de grande dimension formant une première jambe 63 de positionnement, destinée à coopérer avec un montant latéral 55 de l'interface 13' de verrouillage, et une portion de petite dimension formant une deuxième jambe 64 de positionnement apte à venir en appui sur un élément de butée 54 de l'interface de verrouillage 13'. Tel qu'illustré, chaque première jambe 63 peut comporter à son extrémité libre une partie biseautée formant rampe d'insertion pour faciliter le passage des premières jambes à l'intérieur de l'ouverture du cadre formé par l'interface de verrouillage 13' lorsque le corps d'acheminement est basculé en position d'assemblage. Dans cette position, on comprend que les premières jambes portent contre la face interne des montants latéraux bordant l'ouverture du cadre et que les deuxièmes jambes sont en appui sur la face supérieure du montant transversal avant.

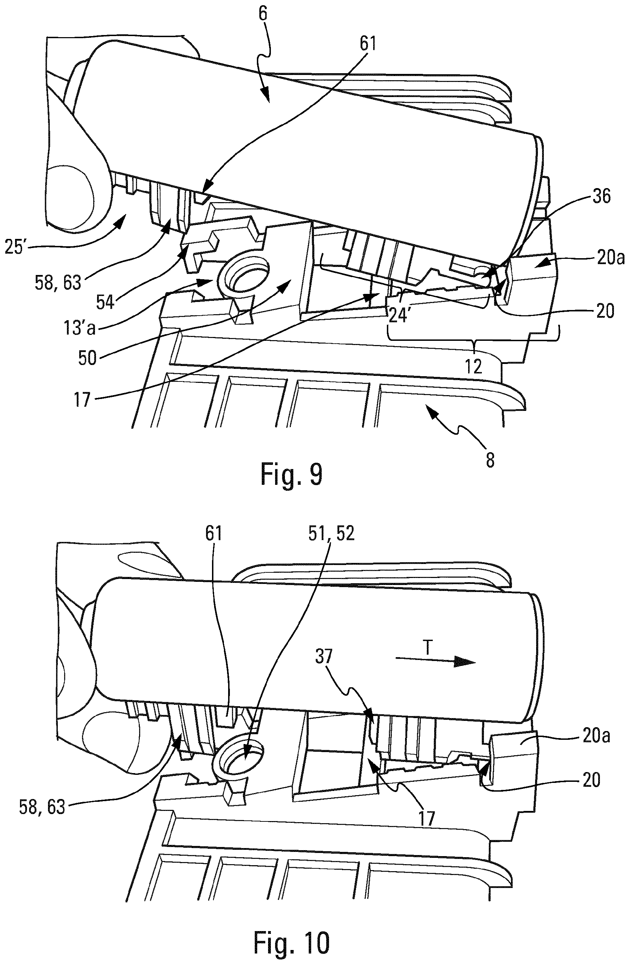

Les figures 9, 10, 11 et 12 illustrent les étapes du procédé de montage du dispositif 100 de fixation rapide selon le deuxième mode de réalisation et rendant notamment visibles les positions de pré-assemblage et d'assemblage du corps 6 d'acheminement de fluide de nettoyage et/ou de séchage par rapport à la platine de support 8.

S'il va ici être décrit en se référant à une illustration du deuxième mode de réalisation du dispositif de fixation rapide, il convient de noter que le procédé de montage comporte, jusqu'à l'étape finale d'assemblage par verrouillage, des étapes communes aux deux modes de réalisation précédemment décrits.

Ces étapes communes consistent successivement en une première étape de positionnement du corps 6, en une deuxième étape de basculement de ce corps par rapport à la platine de support, en une troisième étape de translation du corps dans des moyens de guidage appropriés portés par la platine de support et en une quatrième étape de rotation du corps pour amener à faire coopérer les moyens d'encliquetage.

La première étape consiste à positionner la première partie de guidage 24 du corps 6 d'acheminement de fluide par rapport à l'interface de positionnement et d'orientation 12 en saillie de la seconde face 11 de la platine de support 8. Cette étape (visible sur la figure 9) consiste notamment à positionner les ergots 36 cylindriques de la première partie de guidage 24 à l'entrée de la glissière de guidage en position 20 correspondante ménagée sur l'interface de positionnement et d'orientation 12 de la platine de support 8.

La deuxième étape consiste à basculer le corps 6 d'acheminement de fluide dans une position de pré-assemblage (visible sur la figure 10), pour mettre en appui la dent 37 transversale solidaire du corps 6 d'acheminement de fluide sur la seconde paroi 17 transversale avant de la platine de support 8. La hauteur de cette dent 37 est configurée pour que, dans la position de pré-assemblage, les ergots 36 cylindriques puissent s'introduire dans leur glissière 20 correspondante, en passant sous le rebord 20a.

La troisième étape consiste à translater vers l'arrière de la platine de support 8 le corps 6 d'acheminement de fluide dans une position de butée. Cette étape (visible sur la figure 11) consiste plus précisément à translater les ergots 36 par glissement linéaire à l'intérieur de la glissière 20 correspondante jusqu'à ce que la branche transversale 35 arrière de la première partie de guidage 24 du corps 6 d'acheminement de fluide vienne en butée contre la tige de butée centrale 21 solidaire de l'interface de positionnement et d'orientation 12 de la platine de support 8, de telle sorte qu'à l'intérieur de chaque glissière, les ergots 36 soient logés dans le siège de forme cylindrique complémentaire formée par la paroi de fond 20b. Dans cette position finale de translation, les moyens de fixation par encliquetage, portés par la seconde partie 25' de fixation du corps 6 d'acheminement et par l'interface de verrouillage 13' de la platine de support 8, sont mis en regard.

La quatrième étape consiste à effectuer une rotation du corps 6 d'acheminement de fluide, autour de l'axe de rotation Y défini par la coopération des ergots 36 cylindriques dans le siège correspondant formé par la paroi de fond 20b de la glissière 20, pour faire coopérer l'interface de verrouillage 13' de la platine de support 8 avec la seconde partie 25' de fixation par encliquetage du corps 6 d'acheminement de fluide et faire prendre au corps 6 d'acheminement et à la platine de support 8 une position finale d'assemblage.

Il convient de constater que dans cette position finale d'assemblage, les ergots 19, 39, réalisés de façon complémentaires sur les parois et branches latérales de l'interface de positionnement et de la première partie de guidage, permettent une tenue de la position de l'ensemble, par ajustement serré.

On comprend de ce qui précède que l'étape finale de verrouillage par encliquetage diffère selon que le dispositif de fixation rapide est conforme au premier ou au second mode de réalisation de l'invention.

La figure 5 illustre la position finale d'assemblage du dispositif de fixation rapide 100 selon le premier mode de réalisation de l'invention où la seconde partie de fixation 25 coopère avec l'interface de verrouillage 13 de la platine de support 8.

En particulier, les premiers moyens complémentaires 42 d'encliquetage latéraux et le deuxième moyen complémentaire 41 d'encliquetage transversal sont en prise sur les premiers 32 et seconds 30 moyens d'encliquetage formant les moyens de fixation 23 de l'interface de verrouillage 13.

Tel que cela a pu être décrit précédemment, la rotation générée autour de l'axe de rotation Y dans cette étape finale de verrouillage est permise par la déformation élastique des bras 44 des premiers moyens complémentaires 42 d'encliquetage au contact du pion 34, les bras venant ensuite enserrer ce pion 34, ainsi que par la déformation élastique de la patte 43 déformable élastiquement au contact de la rampe 46, la patte 43 venant ensuite empêcher le dégagement vertical du corps d'acheminement 6 par rapport à cette interface de verrouillage 13. De la sorte, le dispositif 100 de fixation rapide permet selon l'invention de réaliser une fixation fiable par encliquetage quelle que soit la direction de l'effort appliquée sur l'élément de distribution 7 de fluide.

Dans cette position finale d'assemblage, la paire symétrique de butées 40 de la seconde partie 25 de fixation est en appui sur les éléments de butée 28 de l'interface de verrouillage 13 dont les faces supérieures sont inclinées d'un angle alpha (α) inférieur ou égal à 25°, notamment compris entre 10 et 25°, et de en particulier égal à 15°, par rapport à un plan définissant la platine de support 8, par ailleurs porteuse du capteur optique 2. De la sorte, il est possible d'assurer la position du corps 6 d'acheminement de fluide et d'assurer que le déploiement de l'élément de distribution 7 qui lui est rattaché permet une projection de fluide de nettoyage sur la surface optique 4 avec un angle de projection souhaité.

La figure 12 illustre la position finale d'assemblage du dispositif 100 de fixation rapide selon le second mode de réalisation de l'invention où la seconde partie de fixation 25' du corps 6 d'acheminement de fluide coopère avec l'interface de verrouillage 13' de la platine de support 8.

En particulier, les moyens complémentaires de fixation 57 sont en prise avec le moyen 51 d'encliquetage formant les moyens de fixation 23' par encliquetage de l'interface de verrouillage 13'.

Tel que cela a pu être décrit précédemment, la rotation générée autour de l'axe de rotation Y dans cette étape finale de verrouillage est permise par la déformation élastique de la languette flexible 59 au contact de la paroi délimitant l'orifice central 52 agencé en travers de l'ouverture de l'interface de verrouillage 13', cette paroi étant biseautée vers l'intérieur pour faciliter le guidage de la languette dans l'orifice central, la languette flexible 59 venant ensuite empêcher le dégagement vertical du corps d'acheminement 6 par rapport à cette interface de verrouillage 13. La portée angulaire de cette languette flexible 59 permet de réaliser une fixation fiable par encliquetage quelle que soit la direction de l'effort appliquée sur l'élément de distribution 7 de fluide.

Dans cette position finale d'assemblage, les deuxièmes jambes de positionnement 64 sont en appui sur les éléments de butée 28 de l'interface de verrouillage 13' dont les faces supérieures sont inclinées, de l'avant vers l'arrière, d'un angle alpha (α), inférieur ou égal à 25°, notamment compris entre 10 et 25°, par exemple égal à 15°, par rapport à un plan définissant la platine de support 8, par ailleurs porteuse du capteur optique 2. De la sorte, il est possible d'assurer la position du corps 6 d'acheminement de fluide et d'assurer que le déploiement de l'élément de distribution 7 qui lui est rattaché permet une projection de fluide de nettoyage sur la surface optique 4 avec un angle de projection souhaité.

## Revendications

1. Platine (8) de support d'un capteur optique (2) d'un système de détection optique d'un véhicule (1) automobile comportant une première face (10) du côté du capteur optique et une seconde face (11) opposée comportant des moyens de fixation d'un corps (6) d'acheminement de fluide de nettoyage et/ou de séchage d'un dispositif de nettoyage télescopique (3) du capteur optique,
**caractérisé en ce que** ladite platine (8) est configurée pour former, avec ce corps (6) d'acheminement de fluide, un dispositif de fixation rapide (100) du dispositif de nettoyage télescopique (3), la seconde face (11) de la platine (8) de support comportant une interface de positionnement et d'orientation (12) d'une première partie du corps d'acheminement de fluide et une interface de verrouillage (13, 13') d'une deuxième partie du corps (6) d'acheminement de fluide.

2. Platine de support selon la revendication 1, **caractérisée en ce que** l'interface de positionnement et d'orientation (12) comporte au moins un siège de réception d'une première partie du corps d'acheminement ménagé par une paroi de fond en bout d'une glissière de guidage, ledit siège de réception étant configuré pour participer à former un axe de rotation dudit corps d'acheminement.

3. Platine de support selon l'une des revendications 1 ou 2, **caractérisée en ce que** l'interface (13, 13') de verrouillage comporte une ouverture (13a, 13a') de réception de la deuxième partie du corps (6) d'acheminement, avec un premier montant (29, 31, 50) participant à délimiter cette ouverture et qui porte des moyens d'encliquetage (30, 32, 51).

4. Platine de support selon la revendication précédente, **caractérisée en ce qu'**un deuxième montant (27, 53) participant à délimiter l'ouverture (13a) de réception porte des éléments de butée (28, 54).

5. Platine de support selon la revendication précédente, **caractérisée en ce que** les éléments de butée (28, 54) comportent une face supérieure inclinée, par rapport au plan défini par la platine de support (8), d'un angle (α) inférieur ou égal à 25°.

6. Corps (6) d'acheminement de fluide de nettoyage et/ou de séchage d'un dispositif de nettoyage télescopique (3) d'un capteur optique (2) d'un système de détection optique d'un véhicule (1) automobile apte à être fixé sur une platine (8) de support, **caractérise en ce que** ledit corps est configuré pour former, avec cette platine (8), un dispositif de fixation rapide (100), le corps (6) d'acheminement de fluide de nettoyage, s'étendant selon un axe (X) d'allongement, présentant une première extrémité (14) arrière par laquelle le fluide de nettoyage est admis en son sein, et une seconde extrémité (15) avant reliée à un élément (7) de distribution par lequel le fluide est distribué à l'extérieur du corps (6) d'acheminement de fluide vers une surface optique (4) du capteur optique (2), et **en ce que** le corps (6) d'acheminement de fluide comporte une première partie (24) de guidage en position du corps par rapport à la platine (8) de support et une seconde partie (25, 25') de fixation par encliquetage de ce corps sur la platine.

7. Corps d'acheminement de fluide selon la revendication précédente, **caractérisé en ce que** la première partie (24) de guidage en position et la seconde partie (25, 25') de fixation par encliquetage sont sensiblement alignés le long de l'axe d'allongement (X) déploiement du dispositif de nettoyage télescopique.

8. Corps d'acheminement de fluide selon la revendication 6 ou 7, **caractérisé en ce que** la première partie (24) de guidage comporte au moins un ergot (36) cylindrique, participant à définir un axe (Y) de rotation du corps (6) d'acheminement de fluide.

9. Corps d'acheminement de fluide selon la revendication précédente, **caractérisé en ce que** la première partie (24) de guidage comporte un organe de butée au déplacement par rotation du corps (6) d'acheminement de fluide autour de l'axe (Y) de rotation.

10. Corps d'acheminement de fluide selon l'une des revendications 6 à 9, **caractérisé en ce que** la seconde partie (25) de fixation par encliquetage comporte au moins un moyen complémentaire d'encliquetage (41, 42), déformable élastiquement au moins dans la direction du déploiement télescopique, et au moins une butée (40).

11. Ensemble comprenant un corps (6) d'acheminement de fluide de nettoyage et/ou de séchage, selon l'une quelconque des revendications 6 à 10, équipant un dispositif de nettoyage télescopique (3), et une platine (8) de support, selon l'une quelconque des revendications 1 à 5, d'un capteur optique (2) d'un véhicule (1) automobile, ledit corps (6) formant avec la platine (8) un dispositif de fixation rapide (100) du dispositif de nettoyage télescopique.

12. Ensemble selon la revendication précédente, **caractérisé en ce qu'**il comprend, sur une seconde face (11) de la platine (8) de support, une première interface de positionnement et d'orientation (12) et une seconde interface de verrouillage (13, 13') destinées à coopérer respectivement avec une première partie (24) de guidage et une seconde partie (25, 25') de fixation par encliquetage du corps (6) d'acheminement de fluide.

13. Procédé de montage d'un corps (6) d'acheminement de fluide de nettoyage et/ou de séchage selon l'une des revendications 6 à 10 d'un dispositif de nettoyage télescopique (3) sur une platine (8) de support selon l'une des revendications 1 à 5 d'un capteur optique (2) d'un système de détection optique d'un véhicule (1) automobile, au cours duquel on réalise au moins :
- une étape de translation du corps (6) d'acheminement de fluide vers l'interface de positionnement et d'orientation (12) de la platine (8) de support pour faire coopérer au moins un ergot (36) cylindrique du corps (6) d'acheminement de fluide avec une glissière de réception de cette interface de positionnement et d'orientation (12),
- une étape de rotation du corps (6) d'acheminement de fluide, autour de l'axe (Y) de rotation défini par l'au moins un ergot (36) cylindrique, pour permettre le rapprochement et le verrouillage des moyens de fixation (23, 23') par encliquetage.

## Patentansprüche

1. Halteplatte (8) eines optischen Sensors (2) eines optischen Detektionssystems eines Kraftfahrzeugs (1), welche eine erste Seite (10) auf der Seite des optischen Sensors aufweist, und eine gegenüberliegende zweite Seite (11), die Mittel zur Befestigung eines Führungskörpers (6) für Reinigungs- und/oder Trocknungsfluid einer teleskopischen Reinigungsvorrichtung (3) des optischen Sensors aufweist,
**dadurch gekennzeichnet, dass** die Platte (8) dafür ausgelegt ist, mit diesem Fluidführungskörper (6) eine Schnellbefestigungsvorrichtung (100) der teleskopischen Reinigungsvorrichtung (3) zu bilden, wobei die zweite Seite (11) der Halteplatte (8) eine Positionierungs- und Ausrichtungsschnittstelle (12) für einen ersten Teil des Fluidführungskörpers und eine Verriegelungsschnittstelle (13, 13') für einen zweiten Teil des Fluidführungskörpers (6) aufweist.

2. Halteplatte nach Anspruch 1, **dadurch gekennzeichnet, dass** die Positionierungs- und Ausrichtungsschnittstelle (12) wenigstens einen Aufnahmesitz für einen ersten Teil des Führungskörpers aufweist, der durch eine Bodenwand am Ende einer Führungsschiene ausgebildet ist, wobei der Aufnahmesitz dafür ausgelegt ist, an der Bildung einer Drehachse des Führungskörpers mitzuwirken.

3. Halteplatte nach einem der Ansprüche 1 oder 2, **dadurch gekennzeichnet, dass** die Verriegelungsschnittstelle (13, 13') eine Öffnung (13a, 13a') zur Aufnahme des zweiten Teils des Führungskörpers (6) aufweist, mit einer ersten Stütze (29, 31, 50), welche an der Begrenzung dieser Öffnung mitwirkt und welche Rastmittel (30, 32, 51) trägt.

4. Halteplatte nach dem vorhergehenden Anspruch, **dadurch gekennzeichnet, dass** eine zweite Stütze (27, 53), die an der Begrenzung der Aufnahmeöffnung (13a) mitwirkt, Anschlagelemente (28, 54) trägt.

5. Halteplatte nach dem vorhergehenden Anspruch, **dadurch gekennzeichnet, dass** die Anschlagelemente (28, 54) eine Oberseite aufweisen, die bezüglich der durch die Halteplatte (8) definierten Ebene um einen Winkel (α) geneigt ist, der kleiner oder gleich 25° ist.

6. Führungskörper (6) für Reinigungs- und/oder Trocknungsfluid einer teleskopischen Reinigungsvorrichtung (3) eines optischen Sensors (2) eines optischen Detektionssystems eines Kraftfahrzeugs (1), welcher auf einer Halteplatte (8) befestigbar ist,
**dadurch gekennzeichnet, dass** dieser Körper dafür ausgelegt ist, mit dieser Platte (8) eine Schnellbefestigungsvorrichtung (100) zu bilden, wobei sich der Führungskörper (6) für Reinigungsfluid entlang einer Verlängerungsachse (X) erstreckt, ein hinteres erstes Ende (14), über welches das Reinigungsfluid in sein Inneres eingelassen wird, und ein vorderes zweites Ende (15) aufweist, das mit einem Verteilungselement (7) verbunden ist, über welches das Fluid außerhalb des Fluidführungskörpers (6) in Richtung einer optischen Fläche (4) des optischen Sensors (2) verteilt wird, und
dadurch, dass der Fluidführungskörper (6) einen ersten Teil (24) zur Führung des Körpers in seiner Position bezüglich der Halteplatte (8) und einen zweiten Teil (25, 25') zur Befestigung durch Einrasten dieses Körpers auf der Platte aufweist.

7. Fluidführungskörper nach dem vorhergehenden Anspruch, **dadurch gekennzeichnet, dass** der erste Teil (24) zur Führung in der Position und der zweite Teil (25, 25') zur Befestigung durch Einrasten im Wesentlichen entlang der Verlängerungsachse (X) des Ausfahrens der teleskopischen Reinigungsvorrichtung ausgerichtet sind.

8. Fluidführungskörper nach Anspruch 6 oder 7, **dadurch gekennzeichnet, dass** der erste Teil (24) zur Führung wenigstens einen zylindrischen Nocken (36) aufweist, der an der Definition einer Drehachse (Y) des Fluidführungskörpers (6) beteiligt ist.

9. Fluidführungskörper nach dem vorhergehenden Anspruch, **dadurch gekennzeichnet, dass** der erste Teil (24) zur Führung ein Anschlagorgan für die Drehbewegung des Fluidführungskörpers (6) um die Drehachse (Y) aufweist.

10. Fluidführungskörper nach einem der Ansprüche 6 bis 9, **dadurch gekennzeichnet, dass** der zweite Teil (25) zur Befestigung durch Einrasten wenigstens ein komplementäres Rastmittel (41, 42), das wenigstens in der Richtung des teleskopischen Ausfahrens elastisch verformbar ist, und wenigstens einen Anschlag (40) aufweist.

11. Anordnung, welche einen Führungskörper (6) für Reinigungs- und/oder Trocknungsfluid nach einem der Ansprüche 6 bis 10, mit dem eine teleskopische Reinigungsvorrichtung (3) ausgestattet ist, und eine Halteplatte (8) nach einem der Ansprüche 1 bis 5 eines optischen Sensors (2) eines Kraftfahrzeugs (1) umfasst, wobei der Körper (6) mit der Platte (8) eine Schnellbefestigungsvorrichtung (100) der teleskopischen Reinigungsvorrichtung bildet.

12. Anordnung nach dem vorhergehenden Anspruch, **dadurch gekennzeichnet, dass** sie auf einer zweiten Seite (11) der Halteplatte (8) eine erste Positionierungs- und Ausrichtungsschnittstelle (12) und eine zweite Verriegelungsschnittstelle (13, 13') umfasst, die dazu bestimmt sind, mit einem ersten Teil (24) zur Führung bzw. einem zweiten Teil (25, 25') zur Befestigung durch Einrasten des Fluidführungskörpers (6) zusammenzuwirken.

13. Verfahren zur Montage eines Führungskörpers (6) für Reinigungs- und/oder Trocknungsfluid nach einem der Ansprüche 6 bis 10 einer teleskopischen Reinigungsvorrichtung (3) auf einer Halteplatte (8) nach einem der Ansprüche 1 bis 5 eines optischen Sensors (2) eines optischen Detektionssystems eines Kraftfahrzeugs (1), bei welchem wenigstens durchgeführt werden:
- ein Schritt der Translation des Fluidführungskörpers (6) in Richtung der Positionierungs- und Ausrichtungsschnittstelle (12) der Halteplatte (8), um zu bewirken, dass wenigstens ein zylindrischer Nocken (36) des Fluidführungskörpers (6) mit einer Aufnahmeschiene dieser Positionierungs- und Ausrichtungsschnittstelle (12) zusammenwirkt,
- einen Schritt der Drehung des Fluidführungskörpers (6) um die Drehachse (Y), die durch den wenigstens einen zylindrischen Nocken (36) definiert ist, um die Annäherung und die Verriegelung der Befestigungsmittel (23, 23') durch Einrasten zu ermöglichen.

## Claims

1. Support plate (8) for an optical sensor (2) of an optical detection system of a motor vehicle (1) including a first face (10) on the optical sensor side and a second opposite face (11) including means for fixing a cleaning and/or drying fluid transporting body (6) of a telescopic cleaning device (3) for the optical sensor,
**characterized in that** said plate (8) is configured to form, with this fluid transporting body (6), a rapid fixing device (100) for the telescopic cleaning device (3), the second face (11) of the support plate (8) including a positioning and orientating interface (12) for a first part of the fluid transporting body and a locking interface (13, 13') for a second part of this fluid transporting body (6).

2. Support plate according to Claim 1, **characterized in that** the positioning and orientating interface (12) includes at least a seat for receiving a first part of the transporting body provided by a back wall at the end of a guiding rail, said receiving seat being configured to help form an axis of rotation of said transporting body.

3. Support plate according to one of Claims 1 or 2, **characterized in that** the locking interface (13, 13') includes an opening (13a, 13a') for receiving the second part of the transporting body (6), with a first strut (29, 31, 50) helping to define this opening and which bears snap-fit means (30, 32, 51).

4. Support plate according to the preceding claim, **characterized in that** a second strut (27, 53) helping to define the receiving opening (13a) bears abutment elements (28, 54).

5. Support plate according to the preceding claim, **characterized in that** the abutment elements (28, 54) include an upper face inclined, with respect to the plane defined by the support plate (8), by an angle (α) less than or equal to 25°.

6. Cleaning and/or drying fluid transporting body (6) of a telescopic cleaning device (3) for an optical sensor (2) of an optical detection system of a motor vehicle (1) which can be fixed on a support plate (8), **characterized in that** said body is configured to form, with this plate (8), a rapid fixing device (100) for the telescopic cleaning device, the cleaning fluid transporting body (6), extending along an elongation axis (X), having a first rear end (14) through which the cleaning fluid is admitted therein, and a second front end (15) linked to a distributing element (7) through which the fluid is distributed outside the fluid transporting body (6) toward an optical surface (4) of the optical sensor (2), and **in that** the fluid transporting body (6) includes a first part (24) for positionally guiding the body with respect to the support plate (8) and a second part (25, 25') for snap-fit fixing this body on the plate.

7. Fluid transporting body according to the preceding claim, **characterized in that** the first position guiding part (24) and the second snap-fit fixing part (25, 25') are substantially aligned along the deployment elongation axis (X) of the telescopic cleaning device.

8. Fluid transporting body according to Claim 6 or 7, **characterized in that** the first guiding part (24) includes at least one cylindrical lug (36), helping to define an axis (Y) of rotation of the fluid transporting body (6).

9. Fluid transporting device according to the preceding claim, **characterized in that** the first guiding part (24) includes a member for abutment against the rotational movement of the fluid transporting body (6) about the axis of rotation (Y).

10. Fluid transporting body according to one of Claims 6-9, **characterized in that** the second snap-fit fixing part (25) includes at least one snap-fit complementary means (41, 42), which is elastically deformable at least in the direction of the telescopic deployment, and at least one abutment (40).

11. Assembly comprising a cleaning and/or drying fluid transporting body (6) according to any one of Claims 6-10, equipped with a telescopic cleaning device (3), a support plate (8), according to any one of Claims 1-5, for an optical sensor (2) of a motor vehicle (1), said body (6) forming together with the plate (8) a rapid fixing device (100) for the telescopic cleaning device.

12. Assembly according to the preceding claim, **characterized in that** it comprises, on a second face (11) of the support plate (8), a first positioning and orientating interface (12) and a second locking interface (13, 13') which are intended to cooperate with a first guiding part (24) and a second snap-fit fixing part (25, 25') of the fluid transporting body (6).

13. Method of mounting a cleaning and/or drying fluid transporting body (6) according to one of Claims 6-10 of a telescopic cleaning device (3) on a support plate (8) according to one of Claims 1-5 for an optical sensor (2) of an optical detection system of a motor vehicle (1), during which at least the following are carried out:
- a step for translating the fluid transporting body (6) toward the positioning and orientating interface (12) of the support plate (8) in order to make at least one cylindrical lug (36) of the fluid transporting body (6) cooperate with a receiving rail of this positioning and orientating interface (12),
- a step for rotating the fluid transporting body (6), about the axis (Y) of rotation defined by the at least one cylindrical lug (36), in order to allow the snap-fit fixing means (23, 23') to be brought together and locked.
